# EUROPÄISCHE PATENTANMELDUNG

(11) **EP 3 578 308 A1**
(43) Veröffentlichungstag der Anmeldung: **11.12.2019**
(21) Anmeldenummer: 18176191.7
(22) Anmeldetag: 06.06.2018
(51) Int. Cl.: B25C 1/06

(54) **SETZGERÄT**

(71) Anmelder: HILTI Aktiengesellschaft, 9494 Schaan (LI)
(72) Erfinder: Dittrich, Tilo, 6800 Feldkirch (AT); Abu Antoun, Chafic, 9470 Buchs (CH); Bruggmueller, Peter, 6719 Bludesch (AT)
(74) Vertreter: Hilti Aktiengesellschaft Corporate Intellectual Property

(57) **Zusammenfassung**

Setzgerät 10 zum Eintreiben von Befestigungselementen 30 in einen Untergrund, aufweisend eine Aufnahme 20, welche dafür vorgesehen ist, ein Befestigungselement aufzunehmen, ein Eintreibelement 60, welches dafür vorgesehen ist, ein in der Aufnahme aufgenommenes Befestigungselement entlang einer Setzachse in den Untergrund zu befördern, einen Antrieb, welcher dafür vorgesehen ist, das Eintreibelement entlang der Setzachse A auf das Befestigungselement zu anzutreiben, wobei der Antrieb einen elektrischen Kondensator 300, einen an dem Eintreibelement angeordneten Kurzschlussläufer 90 und eine Erregerspule 100 aufweist, welche bei einer Schnellentladung des Kondensators mit Strom durchflossen wird und ein Magnetfeld erzeugt, welches das Eintreibelement auf das Befestigungselement zu beschleunigt, und wobei das Setzgerät ein Mittel zur Erfassung einer Temperatur 180 der Erregerspule und eine Steuereinheit 150 aufweist, welche dazu geeignet ist, einen Betriebsablauf des Setzgeräts in Abhängigkeit von der erfassten Temperatur der Erregerspule zu steuern.

## Beschreibung

Die vorliegende Erfindung betrifft ein Setzgerät zum Eintreiben von Befestigungselementen in einen Untergrund.

Derartige Setzgeräte weisen üblicherweise eine Aufnahme für ein Befestigungselement auf, aus welcher heraus ein darin aufgenommenes Befestigungselement entlang einer Setzachse in den Untergrund befördert wird. Ein Eintreibelement wird hierfür von einem Antrieb entlang der Setzachse auf das Befestigungselement zu angetrieben.

Aus der US 6,830,173 B2 ist ein Setzgerät mit einem Antrieb für ein Eintreibelement bekannt. Der Antrieb weist einen elektrischen Kondensator und eine Spule auf. Zum Antreiben des Eintreibelements wird der Kondensator über die Spule entladen, wodurch eine Lorentz-Kraft auf das Eintreibelement wirkt, so dass das Eintreibelement auf einen Nagel zu bewegt wird.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem Setzgerät zum Eintreiben von Befestigungselementen in einen Untergrund, aufweisend eine Aufnahme, welche dafür vorgesehen ist, ein Befestigungselement aufzunehmen, ein Eintreibelement, welches dafür vorgesehen ist, ein in der Aufnahme aufgenommenes Befestigungselement entlang einer Setzachse in den Untergrund zu befördern, einen Antrieb, welcher dafür vorgesehen ist, das Eintreibelement entlang der Setzachse auf das Befestigungselement zu anzutreiben, wobei der Antrieb einen elektrischen Kondensator, einen an dem Eintreibelement angeordneten Kurzschlussläufer und eine Erregerspule aufweist, welche bei einer Schnellentladung des Kondensators mit Strom durchflossen wird und ein Magnetfeld erzeugt, welches das Eintreibelement auf das Befestigungselement zu beschleunigt, und wobei das Setzgerät ein Mittel zur Erfassung einer Temperatur der Erregerspule und eine Steuereinheit aufweist, welche dazu geeignet ist, einen Betriebsablauf des Setzgeräts in Abhängigkeit von der erfassten Temperatur der Erregerspule zu steuern. Das Setzgerät ist dabei bevorzugt handgeführt einsetzbar. Alternativ ist das Setzgerät stationär oder halbstationär einsetzbar.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Eine vorteilhafte Ausführungsform ist dadurch gekennzeichnet, dass das Mittel zur Erfassung einer Temperatur der Erregerspule einen Temperatursensor umfasst, welcher an der Erregerspule und/oder einem die Erregerspule haltenden Rahmen angeordnet ist.

Eine vorteilhafte Ausführungsform ist dadurch gekennzeichnet, dass das Mittel zur Erfassung einer Temperatur der Erregerspule ein Mittel zur Erfassung eines Ohmschen Widerstands der Erregerspule umfasst.

Eine vorteilhafte Ausführungsform ist dadurch gekennzeichnet, dass das Mittel zur Erfassung einer Temperatur der Erregerspule ein Mittel zur Erfassung einer Zeit, ein Mittel zur Erfassung eines Vorgangs, welcher einen Temperaturanstieg der Erregerspule hervorruft, einen Datenspeicher, in welchem eine Standard-Abkühlrate der Erregerspule und der durch den Vorgang hervorgerufene Temperaturanstieg gespeichert sind, und ein Programm zur Berechnung der Temperatur der Erregerspule, ausgehend von einer Starttemperatur zu einem Startzeitpunkt, auf Basis des erfassten Vorgangs und dem gespeicherten Temperaturanstieg sowie der erfassten Zeit und der gespeicherten Standard-Abkühlrate, umfasst. Bevorzugt umfasst das Mittel zur Erfassung einer Temperatur der Erregerspule einen Umgebungstemperatursensor, wobei die Starttemperatur eine von dem Umgebungstemperatursensor erfasste Temperatur einer Umgebung des Setzgeräts ist. Ebenfalls bevorzugt weist das Setzgerät ein Mittel zur Kühlung der Erregerspule auf, wobei in dem Datenspeicher eine gesteigerte Abkühlrate der Erregerspule gespeichert ist, und wobei das Programm zur Berechnung der Temperatur der Erregerspule in Zeiträumen, in welchen das Mittel zur Kühlung der Erregerspule nicht in Betrieb ist, die Standard-Abkühlrate heranzieht und in Zeiträumen, in welchen das Mittel zur Kühlung der Erregerspule in Betrieb ist, die gesteigerte Abkühlrate heranzieht.

Eine vorteilhafte Ausführungsform ist dadurch gekennzeichnet, dass das Setzgerät ein Mittel zur Kühlung der Erregerspule aufweist, und wobei die Steuereinheit dafür vorgesehen ist, das Mittel zur Kühlung der Erregerspule in Abhängigkeit von der erfassten Temperatur der Erregerspule zu steuern. Dadurch sind mehr Eintreibvorgänge möglich, bevor die Erregerspule und/oder weitere Komponenten des Setzgeräts überhitzen. Ausserdem wird ein mit einer Temperaturerhöhung einhergehender Anstieg eines Ohmschen Widerstandes der Erregerspule und ein damit verbundener Abfall eines Wirkungsgrades des Antriebs reduziert oder vermieden. Bevorzugt umfasst das Mittel zur Kühlung der Erregerspule einen Rotor, wobei die Steuereinheit dafür vorgesehen ist, eine Laufzeit und/oder eine Drehzahl des Rotors in Abhängigkeit von der erfassten Temperatur der Erregerspule zu steuern. Besonders bevorzugt ist die Steuereinheit dafür vorgesehen, die Laufzeit und/oder die Drehzahl des Rotors zu erhöhen, je höher die erfasste Temperatur der Erregerspule ist.

Eine vorteilhafte Ausführungsform ist dadurch gekennzeichnet, dass der Kondensator zu Beginn der Schnellentladung mit einer Ladespannung aufgeladen ist, wobei die Steuereinheit dazu geeignet ist, die Ladespannung in Abhängigkeit von der erfassten Temperatur der Erregerspule zu steuern. Bevorzugt ist die Ladespannung umso grösser, je höher die erfasste Temperatur der Erregerspule ist. Dadurch wird ermöglicht, einen mit steigender Temperatur steigenden Ohmschen Widerstand der Erregerspule auszugleichen.

Eine vorteilhafte Ausführungsform ist dadurch gekennzeichnet, dass die Steuereinheit dafür vorgesehen ist, einen Eintreibvorgang, bei welchem das Eintreibelement auf das Befestigungselement zu beschleunigt wird, freizugeben, wenn die erfasste Temperatur der Erregerspule kleiner als eine vorgegebene Höchsttemperatur ist, und den Eintreibvorgang zu sperren, wenn die erfasste Temperatur der Erregerspule grösser als die vorgegebene Höchsttemperatur ist. Dadurch wird einer Beschädigung der Erregerspule und/oder des weichmagnetischen Rahmens und/oder weiterer Komponenten des Antriebs oder des Setzgeräts aufgrund von Überhitzung vorgebeugt.

Eine vorteilhafte Ausführungsform ist dadurch gekennzeichnet, dass der Kondensator zu Beginn der Schnellentladung mit einer Ladespannung aufgeladen ist, wobei die Steuereinheit dazu geeignet ist, die Ladespannung zu steuern. Bevorzugt wird der Kondensator vor der Schnellentladung in einem Ladevorgang aufgeladen, wobei der Ladevorgang von der Steuereinheit gesteuert wird.

In den Zeichnungen ist die Erfindung in mehreren Ausführungsbeispielen dargestellt.

Es zeigen:
Fig. 1 ein Setzgerät in einem Längsschnitt,
Fig. 2 ein Schaltdiagramm eines Setzgeräts und
Fig. 3 eine Erregerspule in einem Längsschnitt.

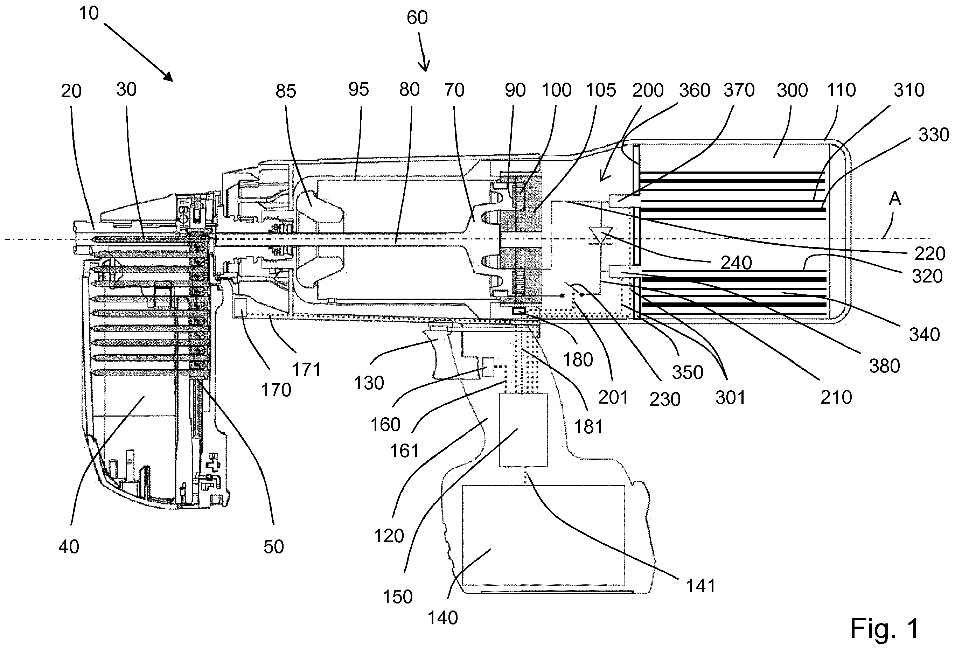

In Fig. 1 ist ein handgeführtes Setzgerät 10 zum Eintreiben von Befestigungselementen in einen nicht gezeigten Untergrund dargestellt. Das Setzgerät 10 weist eine als Bolzenführung ausgebildete Aufnahme 20 auf, in welcher ein als Nagel ausgebildetes Befestigungselement 30 aufgenommen ist, um entlang einer Setzachse A in den Untergrund eingetrieben zu werden (in Fig. 1 nach links). Für eine Zuführung von Befestigungselementen zu der Aufnahme umfasst das Setzgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf. Das Setzgerät 10 weist ein Eintreibelement 60 auf, welches einen Kolbenteller 70 und eine Kolbenstange 80 umfasst. Das Eintreibelement 60 ist dafür vorgesehen, das Befestigungselement 30 aus der Aufnahme 20 heraus entlang der Setzachse A in den Untergrund zu befördern. Hierbei ist das Eintreibelement 60 mit seinem Kolbenteller 70 in einem Führungszylinder 95 entlang der Setzachse A geführt.

Das Eintreibelement 60 wird seinerseits von einem Antrieb angetrieben, welcher einen an dem Kolbenteller 70 angeordneten Kurzschlussläufer 90, eine Erregerspule 100, einen weichmagnetischen Rahmen 105, einen Schaltkreislauf 200 und einen Kondensator 300 mit einem Innenwiderstand von 5 mOhm umfasst. Der Kurzschlussläufer 90 besteht aus einem bevorzugt ringförmigen, besonders bevorzugt kreisringförmigen Element mit einem geringen elektrischen Widerstand, beispielsweise aus Kupfer, und ist auf der von der Aufnahme 20 abgewandten Seite des Kolbentellers 70 an dem Kolbenteller 70 befestigt, beispielsweise verlötet, verschweisst, verklebt, geklemmt oder formschlüssig verbunden. Bei nicht gezeigten Ausführungsbeispielen ist der Kolbenteller selbst als Kurzschlussläufer ausgebildet. Der Schaltkreislauf 200 ist dafür vorgesehen, eine elektrische Schnellentladung des zuvor aufgeladenen Kondensators 300 herbeizuführen und den dabei fliessenden Entladestrom durch die Erregerspule 100 zu leiten, welche in dem Rahmen 105 eingebettet ist. Der Rahmen weist bevorzugt eine Sättigungsflussdichte von mindestens 1,0 T und/oder eine effektive spezifische elektrische Leitfähigkeit von höchstens 10⁶ S/m auf, so dass ein von der Erregerspule 100 erzeugtes Magnetfeld von dem Rahmen 105 verstärkt und Wirbelströme in dem Rahmen 105 unterdrückt werden.

In einer setzbereiten Position des Eintreibelements 60 (Fig. 1) taucht das Eintreibelement 60 mit dem Kolbenteller 70 so in eine nicht näher bezeichnete ringförmige Vertiefung des Rahmens 105 ein, dass der Kurzschlussläufer 90 in geringem Abstand gegenüber der Erregerspule 100 angeordnet ist. Dadurch durchsetzt ein Erregermagnetfeld, welches durch eine Änderung eines durch die Erregerspule fliessenden elektrischen Erregerstroms erzeugt wird, den Kurzschlussläufer 90 und induziert in dem Kurzschlussläufer 90 seinerseits einen ringförmig umlaufenden elektrischen Sekundärstrom. Dieser sich aufbauende und damit sich ändernde Sekundärstrom erzeugt wiederum ein Sekundärmagnetfeld, welches dem Erregermagnetfeld entgegengesetzt ist, wodurch der Kurzschlussläufer 90 eine von der Erregerspule 100 abstossende Lorentz-Kraft erfährt, welche das Eintreibelement 60 auf die Aufnahme 20 sowie das darin aufgenommene Befestigungselement 30 zu antreibt.

Das Setzgerät 10 umfasst weiterhin ein Gehäuse 110, in welchem der Antrieb aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, ein als an dem Rahmen 105 angeordneter Temperatursensor 180 ausgebildetes Mittel zur Erfassung einer Temperatur der Erregerspule 100 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Setzgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Setzgerät 10 an einen nicht gezeigten Untergrund (in Fig. 1 links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und das Eintreibelement 60 in seiner in Fig. 1 dargestellten setzbereiten Position ist, befindet sich das Setzgerät 10 in einem setzbereiten Zustand. Dadurch, dass die Aufladung des Kondensators 300 erst durch das Anpressen des Setzgeräts 10 an den Untergrund bewirkt wird, ist zur Erhöhung der Sicherheit von umstehenden Personen ein Setzvorgang nur dann ermöglicht, wenn das Setzgerät 10 an den Untergrund angepresst ist. Bei nicht gezeigten Ausführungsbeispielen leitet die Steuereinheit den Kondensator-Aufladevorgang bereits bei einem Einschalten des Setzgeräts oder bei einem Abheben des Setzgeräts von dem Untergrund oder bei Beendigung eines vorausgegangenen Eintreibvorgangs ein.

Wenn bei setzbereitem Setzgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu der Erregerspule 100 geleitet wird, indem der Kondensator 300 entladen wird.

Der in Fig. 1 schematisch dargestellte Schaltkreislauf 200 umfasst hierzu zwei Entladeleitungen 210, 220, welche den Kondensator 300 mit der Erregerspule 200 verbinden und von denen zumindest eine Entladeleitung 210 von einem normalerweise geöffneten Entladeschalter 230 unterbrochen ist. Der Schaltkreislauf 200 bildet mit der Erregerspule 100 und dem Kondensator 300 einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch die Erregerspule 100 fliesst. Der schnell ansteigende Entladestrom induziert ein Erregermagnetfeld, welches den Kurzschlussläufer 90 durchsetzt und in dem Kurzschlussläufer 90 seinerseits einen ringförmig umlaufenden elektrischen Sekundärstrom induziert. Dieser sich aufbauende Sekundärstrom erzeugt wiederum ein Sekundärmagnetfeld, welches dem Erregermagnetfeld entgegengesetzt ist, wodurch der Kurzschlussläufer 90 eine von der Erregerspule 100 abstossende Lorentz-Kraft erfährt, welche das Eintreibelement 60 auf die Aufnahme 20 sowie das darin aufgenommene Befestigungselement 30 zu antreibt. Sobald die Kolbenstange 80 des Eintreibelements 60 auf einen nicht näher bezeichneten Kopf des Befestigungselements 30 trifft, wird das Befestigungselement 30 von dem Eintreibelement 60 in den Untergrund eingetrieben. Überschüssige Bewegungsenergie des Eintreibelements 60 wird von einem Bremselement 85 aus einem federelastischen und/oder dämpfenden Material, beispielsweise Gummi, aufgenommen, indem sich das Eintreibelement 60 mit dem Kolbenteller 70 gegen das Bremselement 85 bewegt und von diesem bis zu einem Stillstand abgebremst wird. Danach wird das Eintreibelement 60 von einer nicht näher bezeichneten Rückstellvorrichtung in die setzbereite Position zurückgestellt.

Der Kondensator 300, insbesondere sein Schwerpunkt, ist auf der Setzachse A hinter dem Eintreibelement 60 angeordnet, wohingegen die Aufnahme 20 vor dem Eintreibelement 60 angeordnet ist. In Bezug auf die Setzachse A ist der Kondensator 300 also axial versetzt zu dem Eintreibelement 60 und radial überlappend mit dem Eintreibelement 60 angeordnet. Dadurch lässt sich einerseits eine geringe Länge der Entladeleitungen 210, 220 verwirklichen, wodurch sich deren Widerstände reduzieren und damit ein Wirkungsgrad des Antriebs erhöhen lässt. Andererseits lässt sich ein geringer Abstand eines Schwerpunkts des Setzgeräts 10 zur Setzachse A verwirklichen. Dadurch sind Kippmomente bei einem Rückstoss des Setzgeräts 10 während eines Eintreibvorgangs gering. Bei einem nicht gezeigten Ausführungsbeispiel ist der Kondensator um das Eintreibelement herum angeordnet.

Die Elektroden 310, 320 sind auf einander gegenüberliegenden Seiten an einer um eine Wickelachse aufgewickelten Trägerfolie 330 angeordnet, beispielsweise durch Metallisierung der Trägerfolie 330, insbesondere aufgedampft, wobei die Wickelachse mit der Setzachse A zusammenfällt. Bei nicht gezeigten Ausführungsbeispielen ist die Trägerfolie mit den Elektroden so um die Wickelachse gewickelt, dass ein Durchlass entlang der Wickelachse verbleibt. Insbesondere in diesem Fall ist der Kondensator beispielsweise um die Setzachse herum angeordnet. Die Trägerfolie 330 weist bei einer Ladespannung des Kondensators 300 von 1500 V eine Foliendicke zwischen 2,5 µm und 4,8 µm, bei einer Ladespannung des Kondensators 300 von 3000 V eine Foliendicke von beispielesweise 9,6 µm auf. Bei nicht gezeigten Ausführungsbeispielen ist die Trägerfolie ihrerseits aus zwei oder mehr übereinandergeschichteten Einzelfolien zusammengesetzt. Die Elektroden 310, 320 weisen einen Schichtwiderstand von 50 Ohm/□ auf.

Eine Oberfläche des Kondensators 300 hat die Form eines Zylinders, insbesondere Kreiszylinders, dessen Zylinderachse mit der Setzachse A zusammenfällt. Eine Höhe dieses Zylinders in Richtung der Wickelachse ist im Wesentlichen so gross wie sein senkrecht zur Wickelachse gemessener Durchmesser. Durch ein geringes Verhältnis von Höhe zu Durchmesser des Zylinders werden ein geringer Innenwiderstand bei relativ hoher Kapazität des Kondensators 300 und nicht zuletzt eine kompakte Bauweise des Setzgeräts 10 erreicht. Ein geringer Innenwiderstand des Kondensators 300 wird auch durch einen grossen Leitungsquerschnitt der Elektroden 310, 320 erreicht, insbesondere durch eine hohe Schichtdicke der Elektroden 310, 320, wobei die Auswirkungen der Schichtdicke auf einen Selbstheilungseffekt und/oder eine Lebensdauer des Kondensators 300 zu berücksichtigen sind.

Der Kondensator 300 ist mittels eines Dämpfelements 350 gedämpft an dem übrigen Setzgerät 10 gelagert. Das Dämpfelement 350 dämpft Bewegungen des Kondensators 300 relativ zum übrigen Setzgerät 10 entlang der Setzachse A. Das Dämpfelement 350 ist an der Stirnseite 360 des Kondensators 300 angeordnet und bedeckt die Stirnseite 360 vollständig. Dadurch werden die einzelnen Wicklungen der Trägerfolie 330 von einem Rückstoss des Setzgeräts 10 gleichmässig belastet. Die elektrischen Kontakte 370, 380 ragen dabei von der Stirnfläche 360 ab und durchdringen das Dämpfelement 350. Das Dämpfelement 350 weist zu diesem Zweck jeweils eine Freistellung auf, durch welche die elektrischen Kontakte 370, 380 hindurchragen. Die Verbindungsleitungen 301 weisen zum Ausgleich von Relativbewegungen zwischen dem Kondensator 300 und dem übrigen Setzgerät 10 jeweils eine nicht näher dargestellte Entlastungs- und/oder Dehnungsschlaufe auf. Bei nicht gezeigten Ausführungsbeispielen ist ein weiteres Dämpfelement an dem Kondensator angeordnet, beispielsweise an dessen von der Aufnahme abgewandten Stirnseite. Bevorzugt ist der Kondensator dann zwischen zwei Dämpfelementen eingespannt, dass heisst die Dämpfelemente liegen mit einer Vorspannung an dem Kondensator an. Bei weiteren nicht gezeigten Ausführungsbeispielen weisen die Verbindungsleitungen eine Steifigkeit auf, welche mit zunehmendem Abstand vom Kondensator kontinuierlich abnimmt.

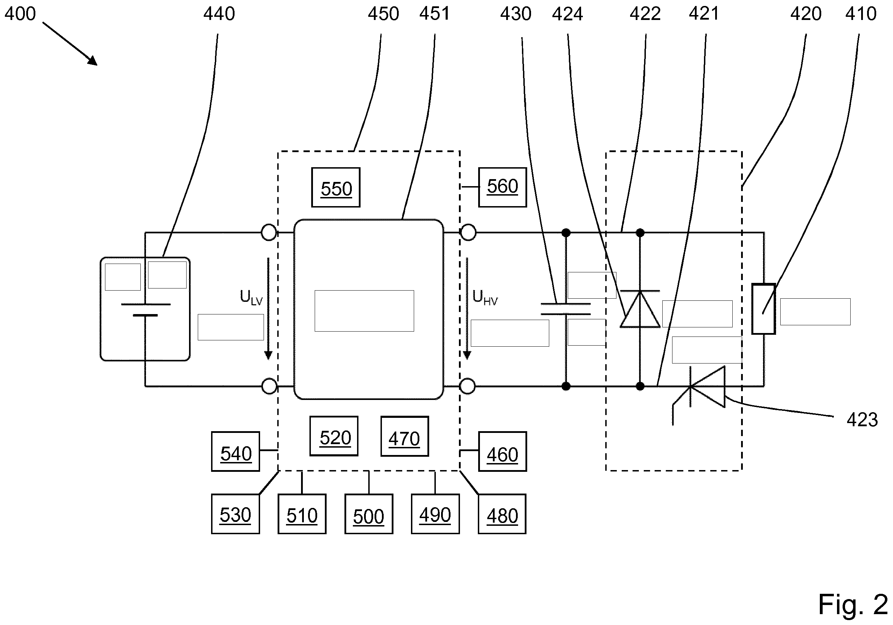

In Fig. 2 ist ein elektrisches Schaltdiagramm 400 eines nicht weiter gezeigten Setzgeräts zum Eintreiben von Befestigungselementen in einen nicht gezeigten Untergrund dargestellt. Das Setzgerät weist ein nicht gezeigtes Gehäuse, einen nicht gezeigten Griff mit einem Betätigungselement, eine nicht gezeigte Aufnahme, ein nicht gezeigtes Magazin, ein nicht gezeigtes Eintreibelement und einen Antrieb für das Eintreibelement auf. Der Antrieb umfasst einen nicht gezeigten, an dem Eintreibelement angeordneten Kurzschlussläufer, eine Erregerspule 410, einen nicht gezeigten weichmagnetischen Rahmen, einen Schaltkreislauf 420, einen Kondensator 430, einen als Akkumulator ausgebildeten elektrischen Energiespeicher 440 und eine Steuereinheit 450 mit einem beispielsweise als Gleichstrom-Gleichstrom-Transformator (englisch «DC/DC converter») ausgebildeten Schaltwandler 451. Der Schaltwandler 451 weist eine elektrisch mit dem elektrischen Energiespeicher 440 verbundene Niederspannungsseite U_{LV} und eine elektrisch mit dem Kondensator 430 verbundene Hochspannungsseite U_{HV} auf.

Der Schaltkreislauf 420 ist dafür vorgesehen, eine elektrische Schnellentladung des zuvor aufgeladenen Kondensators 430 herbeizuführen und den dabei fliessenden Entladestrom durch die Erregerspule 410 zu leiten. Der Schaltkreislauf 420 umfasst hierzu zwei Entladeleitungen 421, 422, welche den Kondensator 430 mit der Erregerspule 420 verbinden und von denen zumindest eine Entladeleitung 421 von einem normalerweise geöffneten Entladeschalter 423 unterbrochen ist. Eine Freilaufdiode 424 unterbindet ein übermässiges Hin- und Herschwingen eines von dem Schaltkreislauf 420 mit der Erregerspule 410 und dem Kondensator 430 gebildeten Schwingkreises.

Wenn das Setzgerät an den Untergrund angepresst wird, leitet die Steuereinheit 450 einen Kondensator-Aufladevorgang ein, bei welchem elektrische Energie von dem elektrischen Energiespeicher 440 zu dem Schaltwandler 451 der Steuereinheit 450 und von dem Schaltwandler 451 zu dem Kondensator 430 geleitet wird, um den Kondensator 430 aufzuladen. Der Schaltwandler 451 wandelt dabei den elektrischen Strom aus dem elektrischen Energiespeicher 440 bei einer elektrischen Spannung von beispielsweise 22 V in einen geeigneten Ladestrom für den Kondensator 430 bei einer elektrischen Spannung von beispielsweise 1500 V um.

Von einer Betätigung des nicht gezeigten Betätigungselements ausgelöst leitet die Steuereinheit 450 einen Kondensator-Entladevorgang ein, bei dem in dem Kondensator 430 gespeicherte elektrische Energie mittels des Schaltkreislaufs 420 von dem Kondensator 430 zu der Erregerspule 410 geleitet wird, indem der Kondensator 430 entladen wird. Zur Einleitung des Kondensator-Entladevorgangs schliesst die Steuereinheit 450 den Entladeschalter 430, wodurch ein Entladestrom des Kondensators 430 mit hoher Stromstärke durch die Erregerspule 410 fliesst. Dadurch erfährt der nicht gezeigte Kurzschlussläufer eine von der Erregerspule 410 abstossende Lorentz-Kraft, welche das Eintreibelement antreibt. Danach wird das Eintreibelement von einer nicht gezeigten Rückstellvorrichtung in eine setzbereite Position zurückgestellt.

Ein Energiebetrag des die Erregerspule 410 bei der Schnellentladung des Kondensators 430 durchfliessenden Stroms wird von der Steuereinheit 450 insbesondere stufenlos gesteuert, indem eine am Kondensator 430 anliegende Ladespannung (U_{HV}) während und/oder am Ende des Kondensator-Aufladevorgangs und vor Beginn der Schnellentladung eingestellt wird. Eine in dem geladenen Kondensator 430 gespeicherte elektrische Energie und damit auch der Energiebetrag des die Erregerspule 410 bei der Schnellentladung des Kondensators 430 durchfliessenden Stroms sind proportional zur Ladespannung und damit mittels der Ladespannung steuerbar. Der Kondensator wird während des Kondensator-Aufladevorgangs so lange geladen, bis die Ladespannung U_{HV} einen Sollwert erreicht hat. Dann wird der Ladestrom abgeschaltet. Wenn die Ladespannung vor der Schnellentladung abnimmt, beispielsweise durch parasitäre Effekte, wird der Ladestrom wieder zugeschaltet, bis die Ladespannung U_{HV} den Sollwert wieder erreicht hat.

Die Steuereinheit 450 steuert den Energiebetrag des die Erregerspule 410 bei der Schnellentladung des Kondensators 430 durchfliessenden Stroms in Abhängigkeit mehrerer Steuergrössen. Zu diesem Zweck umfasst das Setzgerät ein als an der Erregerspule 410 angeordneter Temperatursensor 460 ausgebildetes Mittel zur Erfassung einer Temperatur der Erregerspule 410 und ein Mittel zur Erfassung einer Kapazität des Kondensators, welches beispielsweise als Berechnungsprogramm 470 ausgebildet ist und die Kapazität des Kondensators aus einem Verlauf einer Stromstärke und einer elektrischen Spannung des Ladestroms während des Kondensator-Aufladevorgangs berechnet. Weiterhin umfasst das Setzgerät ein als Beschleunigungssensor 480 ausgebildetes Mittel zur Erfassung einer mechanischen Belastungsgrösse des Setzgeräts. Weiterhin umfasst das Setzgerät ein Mittel zur Erfassung einer Eintreibtiefe des Befestigungselements in den Untergrund, welches einen beispielsweise optischen, kapazitiven oder induktiven Annäherungssensor 490 umfasst, welcher eine Umkehrposition des nicht gezeigten Eintreibelements umfasst. Weiterhin umfasst das Setzgerät ein Mittel zur Erfassung einer Geschwindigkeit des Eintreibelements, welches ein als erster Annäherungssensor 500 ausgebildetes Mittel zur Erfassung eines ersten Zeitpunkts, zu dem das Eintreibelement während seiner Bewegung auf das Befestigungselement zu eine erste Position passiert, ein als zweiter Annäherungssensor 510 ausgebildetes Mittel zur Erfassung eines zweiten Zeitpunkts, zu dem das Eintreibelement während seiner Bewegung auf das Befestigungselement zu eine zweite Position passiert, und ein als Berechnungsprogramm 520 ausgebildetes Mittel zur Erfassung einer Zeitdifferenz zwischen dem ersten Zeitpunkt und dem zweiten Zeitpunkt aufweist. Weiterhin umfasst das Setzgerät ein von einem Benutzer einstellbares Bedienelement 530 und ein als Strichcode-Leser 540 ausgebildetes Mittel zur Erfassung einer Kenngrösse eines einzutreibenden Befestigungselements.

Die Steuergrössen, in deren Abhängigkeit die Steuereinheit 450 den Energiebetrag des die Erregerspule 410 bei der Schnellentladung des Kondensators 430 durchfliessenden Stroms steuert, umfassen die von dem Temperatursensor 460 erfasste Temperatur und/oder die von dem Berechnungsprogramm 470 berechnete Kapazität des Kondensators und/oder die von dem Beschleunigungssensor 480 erfasste Belastungsgrösse des Setzgeräts und/oder die von dem Annäherungssensor 490 erfasste Eintreibtiefe des Befestigungselements und/oder die von dem Berechnungsprogramm 520 berechnete Geschwindigkeit des Eintreibelements und/oder die von dem Benutzer eingestellte Einstellung des Bedienelements 530 und/oder die von dem Strichcode-Leser 540 erfasste Kenngrösse des Befestigungselements.

Weiterhin umfasst das Setzgerät, bevorzugt die Steuereinheit 450, ein Mittel 550 zur Erfassung einer Temperatur der Erregerspule. Das Mittel 550 ist in einem Ausführungsbeispiel ein Programm, welches ein Signal verarbeitet, welches die Steuereinheit 450 von dem Temperatursensor 460 empfängt. In einem weiteren Ausführungsbeispiel umfasst das Mittel 550 ein Mittel zur Erfassung eines Ohmschen Widerstands der Erregerspule, welches einen Signalgeber und einen Spannungsmesser aufweist. Der Signalgeber erzeugt einen durch die Erregerspule 410 fliessenden Messstrom und der Spannungsmesser misst eine dabei über die Erregerspule 410 abfallende elektrische Spannung. Ein Berechnungsprogramm berechnet aus dem Messstrom und der über die Erregerspule 410 abfallenden Spannung den Ohmschen Widerstand der Erregerspule 410. Das Mittel 550 berechnet dann eine Differenz aus dem so erhaltenen Ohmschen Widerstand der Erregerspule 410 und einem Referenzwiderstand, welcher auf die gleiche Weise nach längerer Zeit ohne Setzbetrieb, also bei Umgebungstemperatur, erfasst wurde. Das Mittel 550 berechnet schliesslich aus dieser Differenz die Temperatur der Erregerspule 410.

In einem weiteren Ausführungsbeispiel umfasst das Mittel 550 ein als Timer ausgebildetes Mittel zur Erfassung einer Zeit, ein als Datenempfänger ausgebildetes Mittel zur Erfassung eines Eintreibvorgangs als Vorgang, welcher einen Temperaturanstieg der Erregerspule hervorruft, einen Datenspeicher, in welchem eine Standard-Abkühlrate der Erregerspule und der durch den Vorgang hervorgerufene Temperaturanstieg gespeichert sind, und ein Programm zur Berechnung der Temperatur der Erregerspule 410. Das Mittel zur Erfassung eines Eintreibvorgangs ist als Informationsempfänger ausgebildet, welcher von der Steuereinheit 450 jeweils eine Information über einen von der Steuereinheit 450 gestarteten Eintreibvorgang empfängt. Die Temperatur der Erregerspule 410 wird wie folgt berechnet. Nach längerem Nichtgebrauch des Setzgeräts wird eine Geräteelektronik des Setzgeräts durch Betätigung eines Hauptschalters, eines Anpressschalters, eines Auslöseschalters oder eines Bewegungssensors aufgeweckt. Das Programm zur Berechnung der Temperatur der Erregerspule 410 liest dann eine von dem Temperatursensor 460 oder einem Umgebungstemperatursensor erfasste Starttemperatur als Ist-Temperatur ein. Ausserdem wird der Timer gestartet. Sobald ein erster Eintreibvorgang erfasst wird, wird der in dem Datenspeicher gespeicherte Temperaturanstieg zu der Ist-Temperatur addiert und die Summe als neue Ist-Temperatur gespeichert. Sobald ein weiterer Eintreibvorgang erfasst wird, wird zunächst aus einer Differenz der Ist-Temperatur und der von dem Umgebungstemperatursesnsor erfassten Umgebungstemperatur sowie der von dem Timer erfassten Zeit, welche seit dem letzten Eintreibvorgang vergangen ist, unter Verwendung der in dem Datenspeicher gespeicherten Standard-Abkühlrate ein Temperaturabfall berechnet. Anschliessend werden der Temperaturabfall von der Ist-Temperatur subtrahiert und der in dem Datenspeicher gespeicherte Temperaturanstieg addiert und die Summe als neue Ist-Temperatur gespeichert. Nach einer längeren Zeit ohne Eintreibvorgänge von beispielsweise zwei Stunden wird der Timer auf null gesetzt und die Elektronik des Setzgeräts in einen Schlafmodus versetzt oder abgeschaltet. Der Umgebungstemperatursensor ist vorzugsweise auf einer Platine der Elektronik, beispielsweise der Steuereinheit 450, angeordnet.

Das Setzgerät weist ein Mittel 560 zur Kühlung der Erregerspule 410 auf, welches einen Rotor umfasst und beispielsweise als Lüfter oder Umwälzpumpe für eine Kühlflüssigkeit ausgebildet ist. Die Steuereinheit 450 ist dafür vorgesehen, das Mittel 560 zur Kühlung der Erregerspule 410, beispielsweise eine Laufzeit und/oder Drehzahl des Rotors, in Abhängigkeit von der erfassten Temperatur der Erregerspule 410 zu steuern. In dem zuvor beschriebenen Ausführungsbeispiel ist in dem Datenspeicher eine gesteigerte Abkühlrate der Erregerspule 410 gespeichert, wobei das Programm zur Berechnung der Temperatur der Erregerspule 410 in Zeiträumen, in welchen das Mittel 560 zur Kühlung der Erregerspule 410 nicht in Betrieb ist, die Standard-Abkühlrate heranzieht und in Zeiträumen, in welchen das Mittel 560 in Betrieb ist, die gesteigerte Abkühlrate heranzieht.

Die Steuereinheit 450 ist dazu geeignet, weitere Betriebsabläufe des Setzgeräts in Abhängigkeit von der erfassten Temperatur der Erregerspule 410 zu steuern. Beispielsweise wird der Sollwert für die Ladespannung des Kondensators 430 in Abhängigkeit von der erfassten Temperatur der Erregerspule 410 gesteuert, wobei der Sollwert umso grösser ist, je höher die erfasste Temperatur der Erregerspule 410 ist. Weiterhin gibt die Steuereinheit 450 einen Eintreibvorgang nur dann frei, wenn die erfasste Temperatur der Erregerspule 410 kleiner als eine vorgegebene Höchsttemperatur ist. Wenn die erfasste Temperatur der Erregerspule 410 grösser als die vorgegebene Höchsttemperatur ist, wird der Eintreibvorgang dagegen gesperrt. Das Mittel 560 zur Kühlung der Erregerspule 410 bleibt dabei vorzugsweise in Betrieb.

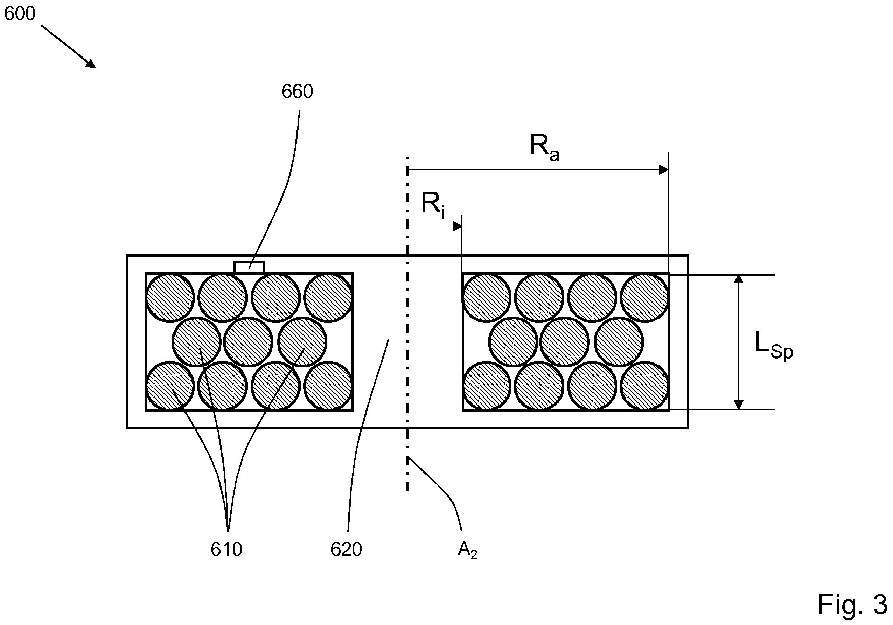

In Fig. 3 ist eine Erregerspule 600 in einem Längsschnitt dargestellt. Die Erregerspule 600 umfasst einen elektrischen Leiter, vorzugsweise aus Kupfer, mit einem beispielsweise kreisrunden Querschnitt, welcher in mehreren Windungen 610 um eine Setzachse A₂ gewunden ist. Insgesamt hat die Erregerspule eine im Wesentlichen zylindrische, insbesondere kreiszylindrische äussere Form mit einem Aussendurchmesser Rₐ und einer Spulenlänge L_{Sp} in Richtung der Setzachse A₂. In einem bezüglich der Setzachse A₂ radial inneren Bereich weist die Erregerspule 600 einen Freiraum 620 auf, welcher vorzugsweise ebenfalls zylindrisch, insbesondere kreiszylindrisch ist und einen Innendurchmesser Rᵢ der Erregerspule definiert.

An einer bezüglich der Setzachse A₂ axialen Stirnseite der Erregerspule 600 ist ein als Temperatursensor 660 ausgebildetes Mittel zur Erfassung einer Temperatur der Erregerspule 600 angeordnet und mit der Erregerspule 600 wärmeleitend verbunden, beispielsweise mittels einer Wärmeleitpaste. Bei nicht gezeigten Ausführungsbeispielen ist der Temperatursensor an einem Innenumfang oder Aussenumfang der Erregerspule angeordnet.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Setzgerät auch für andere Anwendungen einsetzbar ist.

## Patentansprüche

1. Setzgerät zum Eintreiben von Befestigungselementen in einen Untergrund, insbesondere handgeführtes Setzgerät, aufweisend eine Aufnahme, welche dafür vorgesehen ist, ein Befestigungselement aufzunehmen, ein Eintreibelement, welches dafür vorgesehen ist, ein in der Aufnahme aufgenommenes Befestigungselement entlang einer Setzachse in den Untergrund zu befördern, einen Antrieb, welcher dafür vorgesehen ist, das Eintreibelement entlang der Setzachse auf das Befestigungselement zu anzutreiben, wobei der Antrieb einen elektrischen Kondensator, einen an dem Eintreibelement angeordneten Kurzschlussläufer und eine Erregerspule aufweist, welche bei einer Schnellentladung des Kondensators mit Strom durchflossen wird und ein Magnetfeld erzeugt, welches das Eintreibelement auf das Befestigungselement zu beschleunigt, und wobei das Setzgerät ein Mittel zur Erfassung einer Temperatur der Erregerspule und eine Steuereinheit aufweist, welche dazu geeignet ist, einen Betriebsablauf des Setzgeräts in Abhängigkeit von der erfassten Temperatur der Erregerspule zu steuern.

2. Setzgerät nach Anspruch 1, wobei das Mittel zur Erfassung einer Temperatur der Erregerspule einen Temperatursensor umfasst, welcher an der Erregerspule und/oder einem die Erregerspule haltenden Rahmen angeordnet ist.

3. Setzgerät nach Anspruch 1, wobei das Mittel zur Erfassung einer Temperatur der Erregerspule ein Mittel zur Erfassung eines Ohmschen Widerstands der Erregerspule umfasst.

4. Setzgerät nach Anspruch 1, wobei das Mittel zur Erfassung einer Temperatur der Erregerspule ein Mittel zur Erfassung einer Zeit, ein Mittel zur Erfassung eines Vorgangs, welcher einen Temperaturanstieg der Erregerspule hervorruft, einen Datenspeicher, in welchem eine Standard-Abkühlrate der Erregerspule und der durch den Vorgang hervorgerufene Temperaturanstieg gespeichert sind, und ein Programm zur Berechnung der Temperatur der Erregerspule, ausgehend von einer Starttemperatur zu einem Startzeitpunkt, auf Basis des erfassten Vorgangs und dem gespeicherten Temperaturanstieg sowie der erfassten Zeit und der gespeicherten Standard-Abkühlrate, umfasst.

5. Setzgerät nach Anspruch 4, wobei das Mittel zur Erfassung einer Temperatur der Erregerspule einen Umgebungstemperatursensor umfasst, und wobei die Starttemperatur eine von dem Umgebungstemperatursensor erfasste Temperatur einer Umgebung des Setzgeräts ist.

6. Setzgerät nach einem der Ansprüche 4 bis 5, wobei das Setzgerät ein Mittel zur Kühlung der Erregerspule aufweist, wobei in dem Datenspeicher eine gesteigerte Abkühlrate der Erregerspule gespeichert ist, und wobei das Programm zur Berechnung der Temperatur der Erregerspule in Zeiträumen, in welchen das Mittel zur Kühlung der Erregerspule nicht in Betrieb ist, die Standard-Abkühlrate heranzieht und in Zeiträumen, in welchen das Mittel zur Kühlung der Erregerspule in Betrieb ist, die gesteigerte Abkühlrate heranzieht.

7. Setzgerät nach einem der vorhergehenden Ansprüche, wobei das Setzgerät ein Mittel zur Kühlung der Erregerspule aufweist, und wobei die Steuereinheit dafür vorgesehen ist, das Mittel zur Kühlung der Erregerspule in Abhängigkeit von der erfassten Temperatur der Erregerspule zu steuern.

8. Setzgerät nach Anspruch 7, wobei das Mittel zur Kühlung der Erregerspule einen Rotor umfasst, und wobei die Steuereinheit dafür vorgesehen ist, eine Laufzeit und/oder eine Drehzahl des Rotors in Abhängigkeit von der erfassten Temperatur der Erregerspule zu steuern.

9. Setzgerät nach Anspruch 8, wobei die Steuereinheit dafür vorgesehen ist, die Laufzeit und/oder die Drehzahl des Rotors zu erhöhen, je höher die erfasste Temperatur der Erregerspule ist.

10. Setzgerät nach einem der vorhergehenden Ansprüche, wobei der Kondensator zu Beginn der Schnellentladung mit einer Ladespannung aufgeladen ist, und wobei die Steuereinheit dazu geeignet ist, die Ladespannung in Abhängigkeit von der erfassten Temperatur der Erregerspule zu steuern.

11. Setzgerät nach Anspruch 10, wobei die Ladespannung umso grösser ist, je höher die erfasste Temperatur der Erregerspule ist.

12. Setzgerät nach einem der vorhergehenden Ansprüche, wobei die Steuereinheit dafür vorgesehen ist, einen Eintreibvorgang, bei welchem das Eintreibelement auf das Befestigungselement zu beschleunigt wird, freizugeben, wenn die erfasste Temperatur der Erregerspule kleiner als eine vorgegebene Höchsttemperatur ist, und den Eintreibvorgang zu sperren, wenn die erfasste Temperatur der Erregerspule grösser als die vorgegebene Höchsttemperatur ist.
